Europäisches Patentamt

European Patent Office

Office européen des brevets

(11) Veröffentlichungsnummer: **0 214 395**
**B1**

## EUROPÄISCHE PATENTSCHRIFT

(45) Veröffentlichungstag der Patentschrift:
**17.01.90**

(21) Anmeldenummer: **86109212.0**

(22) Anmeldetag: **05.07.86**

(51) Int. Cl.⁴: **F16L 25/00**, F16L 21/00,
F16L 17/04

(54) **Elastische Rohrverbindung, insbesondere flexible Rohrkupplung.**

(30) Priorität: **12.09.85 DE 3532545**

(43) Veröffentlichungstag der Anmeldung:
**18.03.87 Patentblatt 87/12**

(45) Bekanntmachung des Hinweises auf die Patenterteilung:
**17.01.90 Patentblatt 90/3**

(84) Benannte Vertragsstaaten:
**CH DE FR IT LI**

(56) Entgegenhaltungen:
**EP-A- 0 079 457**
**DE-U- 8 331 029**
**FR-A- 2 436 929**
**US-A- 4 480 860**

(73) Patentinhaber: **Taylor Kerr (Couplings) Limited,**
**14-18 Heddon Street Regent Street, London**
**W1R 7LF(GB)**

(72) Erfinder: **Taylor, Neil John Thornton, 31 Northwood Way,**
**Northwood Middlesex(GB)**
Erfinder: **Taylor, William, Company Director Elm Dyke,**
**Elm Park Road, Pinner Middlesex(GB)**
Erfinder: **Webb, Ian Richard, Company Director 34,**
**Kenton Park Crescent, Kenton Harrow Middlesex(GB)**

(74) Vertreter: **Patentanwälte Dipl.-Ing. Alex Stenger**
**Dipl.-Ing. Wolfram Watzke Dipl.-Ing. Heinz J. Ring,**
**Kaiser-Friedrich-Ring 70, D-4000 Düsseldorf 11(DE)**

## Beschreibung

Gegenstand der Erfindung ist eine elastische Rohrverbindung, insbesondere flexible Rohrkupplung zum druckdichten Verbinden zweier Rohre miteinander, bestehend aus einem rohrförmigen, längsgeschlitzten metallischen Mantel, einer daran befestigten Spannverschraubung zur Verengung des Längsschlitzes und einer innerhalb des Mantels angeordneten Dichtmanschette aus elastischem Material, insbesondere Kunstkautschuk, mit an den beiden freien Enden angeformten, sich radial mit vorgegebener Stärke nach innen zu den Rohren hin erstreckenden Dichtlippen.

Eine mechanische Rohrverbindung in Form einer flexiblen Rohrkupplung dieser Art ist aus der EP-A 0 079 457 bekannt. Sie dient zum druckdichten Verbinden zweier glattendiger Rohre jeglichen Materials miteinander. Die Rohrverbindung besteht dabei aus einem rohrförmigen, längsgeschlitzten metallischen Mantel mit einer daran befestigten Spannverschraubung, mit der der metallische Mantel durch Verengung des Längsschlitzes in Richtung des Rohrumfanges angezogen werden kann. Innerhalb des Mantels ist eine Dichtmanschette aus elastischem Material angeordnet, an deren beiden freien Enden Dichtlippen angeformt sind. Diese erstrecken sich radial mit vorgegebener Stärke nach innen zu den Rohren hin und kommen nach Betätigung der Spannverschraubung an den Außenwandungen der Rohre zur Anlage.

Die Manschette paßt sich dabei wechselnden Druckbelastungen an.

In gewissem Maße sind auch Unterschiede im Rohr-Außendurchmesser von miteinander zu verbindenden Rohren durch die bekannte Rohrkupplung kompensierbar. So sind beispielsweise im Bereich von Rohren der Nennweiten von 50 mm bis 350 mm Differenzen zwischen 1,5 mm und 4 mm allein aufgrund der Elastizität der Dichtlippen zusammen mit der Flexibilität des metallischen Mantels kompensierbar. Bei größeren Unterschieden im Rohr-Außendurchmesser ist jedoch ein solcher Ausgleich nachteiligerweise nicht mehr möglich.

Insbesondere ein Zusammenschließen vorhandener, alter Leitungen im Gas- und Wasserversorgungsbereich sowie in der Wasser-Entsorgung mit Rohren heutiger Fertigung, die gegebenenfalls aus einem unterschiedlichen Material bestehen können und einen größeren oder kleineren Außendurchmesser als das vorhandene, alte Rohr haben können, ist mit der bekannten Rohrverbindung nicht möglich, sofern diese Abweichung einige Millimeter überschreitet. Dies gilt auch für das Zusammenschließen von Rohrleitungen mit unterschiedlichen Außendurchmessern, bedingt durch unterschiedliche Nenndrücke des jeweiligen Leitungsteils und für das Verbinden von Rohren unterschiedlichen Materials, die materialbedingt unterschiedliche Außendurchmesser haben.

Aus der US-A 4 480 860 ist eine Rohrverbindung zum druckdichten Verbinden zweier Rohre miteinander bekannt, die zunächst aus einem rohrförmigen, längsgeschlitzten metallischen Mantel besteht, der mittels einer daran befestigten Spannverschraubung in seinem Innendurchmesser verringert werden kann. Innerhalb dieses Mantels ist eine im wesentlichen zylindermantelförmige Dichtmanschette aus elastischem Material angeordnet. Um Rohre unterschiedlicher Außendurchmesser miteinander verbinden zu können, ist wenigstens eine ebenfalls zylindermantelförmige Adaptermanschette vorgesehen, die einen derartigen Außendurchmesser besitzt, daß sie in die Dichtmanschette eingeschoben werden kann, und die einen derartigen Innendurchmesser aufweist, daß dieser im wesentlichen dem Außendurchmesser des Rohres mit dem kleineren Außendurchmesser entspricht. Die axiale Breite der Adaptermanschette entspricht dabei im wesentlichen der halben axialen Breite der Dichtmanschette.

Bei dieser bekannten Rohrverbindung ist von Nachteil, daß die Manschette aus mehreren Teilen besteht (Dichtmanschette sowie gegebenenfalls mehrere Adaptermanschetten), was aufwendig in der Lagerhaltung sowie insbesondere in der Handhabung der Rohrverbindung ist. Dabei ist die bekannte Rohrverbindung nur für Rohrabmessungen der Haushaltsinstallation gedacht und geeignet, insbesondere ist es mit der bekannten Rohrverbindung kaum möglich, diese für Rohre mit Außendurchmessern von über 100 mm bis 150 mm anzuwenden.

Aus der FR-A 2 436 929 ist eine Rohrverbindung bekannt, mittels der zwei Rohre unterschiedlicher Außendurchmesser miteinander verbunden werden können. Die Rohrverbindung besteht dabei aus einer relativ steifen Manschette, deren einstückig angeformte sowie flexiblen Enden entsprechend der Außendurchmesser der zu verbindenden Rohre trichterförmig verjüngt sind. Die flexiblen Enden der Manschette passen sich dabei der Außenkontur der zu verbindenden Rohre an, nachdem diese in die Rohrverbindung hineingesteckt worden sind.

Bei dieser bekannten Rohrverbindung ist von Nachteil, daß sie keinen hydrostatischen Innendruck der Rohre aufnehmen kann, da sich unter Innendruck die flexiblen Enden von den Rohrwänden abheben würden. Vielmehr handelt es sich bei der bekannten Rohrverbindung um eine wasserdichte Dichtung, die das Eindringen von Wasser verhindern soll. Die bekannte Rohrverbindung ist somit weder für Druckleitungen noch für größere Rohrdurchmesser anwendbar.

Ausgehend von einer elastischen Rohrverbindung der eingangs angegebenen Art liegt der Erfindung die Aufgabe zugrunde, unter Meidung der Nachteile beim Stand der Technik das Zusammenschließen von glattendigen Rohren mit über den Toleranzbereich hinaus unterschiedlichen Durchmessern in einfacher Weise zu ermöglichen und eine elastische Rohrverbindung bereitzustellen, die aufgrund ihrer Konstruktion einfach handhabbar ist, hinsichtlich der Druckdichtigkeit sicher ist und Vorteile in der Handhabung bauseitig besitzt. Insgesamt soll damit eine günstige Wirtschaftlichkeit für den Anwender erzielt werden.

Als technische Lösung wird mit der Erfindung vorgeschlagen, daß die Dichtlippen eine voneinander unterschiedliche radiale Stärke haben und daß die axiale Breite der radial stärkeren Dichtlippe größer als die der anderen Dichtlippe ist.

Mit der Erfindung ist es derart gelungen, die seitlichen Dichtlippen auf der einen Seite so zu verändern, daß die Dichtmanschette mit dem sie umgebenden Gehäusemantel ein kleineres Rohr so dicht und fest umschließt, wie dies auf der anderen Seite mit der regulär ausgebildeten Dichtlippe geschieht. Vorzugsweise wird die Veränderung dadurch erreicht, daß die radiale Stärke der einen Dichtlippe verringert wird bzw. der innere Durchmesser der Dichtlippe vergrößert wird, so daß Durchmesserunterschiede der zu verbindenden Rohre bis zu 25 mm oder auch mehr kompensiert werden können. Die Rohrverbindung ist dabei für Rohrdurchmesser bis 3 m anwendbar sowie darüber hinaus für Druckleitungen bis zu 16 bar Betriebsdruck, so daß insgesamt gesehen die erfindungsgemäße Rohrverbindung alle Voraussetzungen für große Rohrdurchmesser, hohe Betriebsdrücke und gute Dichtfähigkeit erfüllt. Da die axiale Breite der radial stärkeren Dichtlippe größer ist als die der anderen (normalen) Dichtlippe, besitzt die radial stärkere Dichtlippe vergleichbar Stabilitätseigenschaften wie die radial schwächere Dichtlippe. Vorzugsweise ist dabei die radial stärkere Dichtlippe etwa doppelt so groß wie die andere Dichtlippe. Gleichzeitig wird mit der erfindungsgemäßen elastischen Rohrverbindung erreicht, daß die flexiblen Eigenschaften der Kupplung, im wesentlichen nämlich die Kompensation von Wärmeveränderungen der Rohre und von Winkelabweichungen in der Verbindungsstelle, erhalten bleiben.

Insgesamt wird durch die Erfindung erreicht, daß Rohre mit stark unterschiedlichen Außendurchmessern mit wesentlich geringeren Aufwendungen material- und montagemäßig miteinander verbunden werden können. Vorzugsweise ist dabei die radiale Stärke der einen Dichtlippe um > 4 mm gegenüber der der anderen Dichtlippe vergrößert.

Gemäß einer bevorzugten Ausführungsform der Erfindung ist bei Rohrnennweiten zwischen 50 mm und 350 mm der innere Durchmesser der einen Dichtlippe > 4 mm bis 25 mm größer als der innere Durchmesser der zweiten Dichtlippe gewählt.

Zur Verbesserung der Dichtwirkung ist gemäß einer zweckmäßigen Ausgestaltung der Erfindung weiterhin vorgeschlagen, die Dichtlippen mit einem jeweils axial nach innen angeformten, im Querschnitt trapezförmigen, durch eine Hohlkehle am Steg der Dichtmanschette freigestellten Ringansatz zu versehen, der im montierten Zustand eine flächenförmige Ringabdichtung ausreichender Flächenpressung gewährleistet und bei steigendem Druck des Fördermediums durch den in der Hohlkehle im freigestellten Ringansatz ebenfalls steigenden Druck die Dichtlippe weiter anpreßt.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer erfindungsgemäßen Stufenkupplung schematisch dargestellt ist. In der Zeichnung zeigt:

Fig. 1 eine Stufenkupplung in perspektivischer Darstellung,

Fig. 2 die Stufenkupplung der Fig. 1 in einer Seitenansicht, teilweise im Schnitt und

Fig. 3 eine den Verschraubungsbereich der Stufenkupplung der Fig. 1 nicht erfassende schematische Schnittdarstellung.

Die in der Zeichnung dargestellte Stufenkupplung 1 weist einen rohrförmigen Mantel 2 aus gewalztem Stahl auf, dessen beiden freien Enden unter Belassung eines Längsspalts 3 mit einer Spannverschraubung 4 gegeneinander gezogen werden können. Die Spannverschraubung 4 besteht aus durch Laschen 5 des Mantels 2 gesteckte Spannstifte 6, die durch in Richtung des Rohrumfangs anziehbare Spannschrauben 7 miteinander verbunden sind.

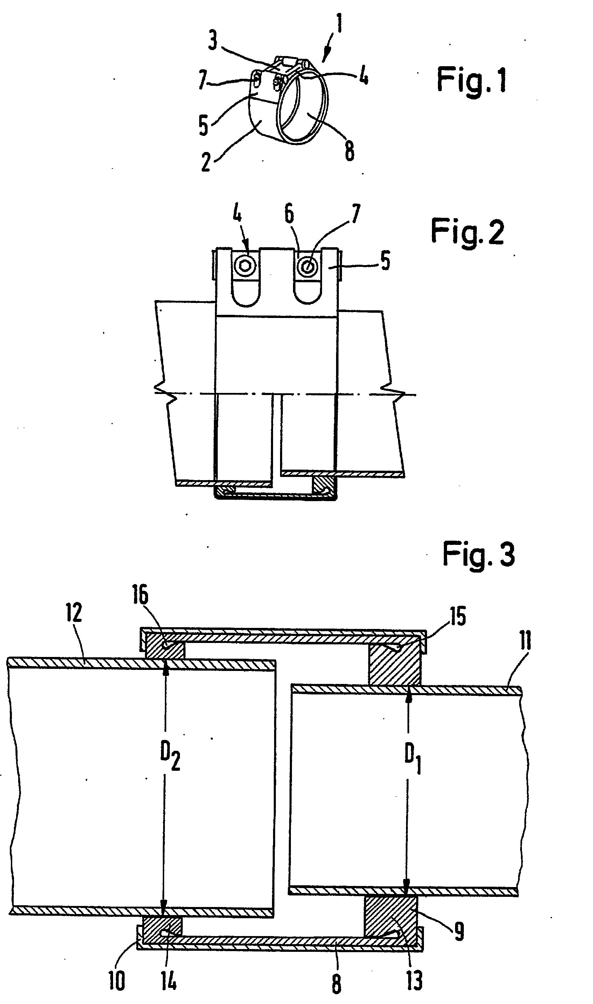

Der Mantel 2 ist, wie Fig. 3 der Zeichnung zeigt, seitlich nach innen umgebogen, um eine eingelegte Dichtungsmanschette 8 aus Kunstkautschuk sicher zu halten. Die Dichtungsmanschette 8 ist einstückig rohrförmig ausgebildet und weist an ihren beiden freien Enden angeformte, sich radial nach innen hin erstreckende Dichtlippen 9, 10 auf. Gemäß Fig. 3 der Zeichnung sind Rohre unterschiedlichen Außendurchmessers, nämlich ein Rohr 11 kleineren Durchmessers und ein Rohr 12 größeren Durchmessers durch die Stufenkupplung 1 in koaxialer Anordnung zueinander zu verbinden. Um dies zu ermöglichen, weisen die Dichtlippen 9, 10 eine voneinander über den Herstellungstoleranzbereich hinausgehende unterschiedliche radiale Stärke auf. Die Dichtlippe 9 ist stärker als die Dichtlippe 10 ausgebildet. Der innere Durchmesser D1 der Dichtlippe 9 ist erheblich kleiner als der innere Durchmesser D2 der Dichtlippe 10. Die Differenz kann je nach dem Durchmesser der miteinander durch die Stufenkupplung zu verbindenden Rohre bis zu 25 mm und mehr betragen.

Die Dichtlippen 9, 10 weisen einen jeweils axial nach innen angeformten, im Querschnitt trapezförmigen freien Ringansatz 13, 14 auf. Die Ringansätze 13, 14 sind einstückig mit der Dichtmanschette ausgebildet und passen sich im Montagezustand (Fig. 3) mit ausreichender Flächenpreßkraft an die Oberfläche der zu verbindenden Rohre 11, 12 an. Diese wird noch dadurch vergrößert, daß das unter Druck stehende Medium, das in den Rohren 11, 12 geführt wird, in die jeweilige Hohlkehle 15, 16 eindringt und damit die Druckwirkung des Mediums selbst zur Erhöhung der Flächenpreßkraft an den Dichtflächen ausgenutzt wird.

Zur Montage wird die Stufenkupplung 1 über die freien Enden der zu verbindenden Rohr 11, 12, die beispielsweise einen Unterschied im Rohr-Außendurchmesser von 25 mm zueinander haben, geschoben und sodann durch Anziehen der Spannschrauben 7 unter Verringerung des Mantel-Längsspalts 3 solange angezogen, bis eine druckdichte und sichere Rohrverbindung hergestellt ist. Selbstverständlich ist darauf zu achten, daß die stärkere Dichtlippe 9 am kleineren Rohr und die Dichtlippe 10 geringerer radialer Stärke am größeren Rohr positioniert werden. Es passen sich dann beim Montagevorgang die elastischen Dichtlippen 9, 10 der Unrundheit von üblichem Rohrmaterial an, so daß eine volle Auflage der Dichtfläche der Lippen gewährleistet ist. Der im Beispiel angenommene Unterschied im Rohr-Außendurchmesser der beiden Rohre von 25 mm wird mit der Stufenkupplung 1 in konstruktiv und montagemäßig außerordentlich einfacher Weise ausgeglichen, ohne daß eine Beeinträchtigung der Druckdichtigkeit zu befürchten ist.

Bezugszeichenliste

  1 Stufenkupplung
  2 Mantel
  3 Längsspalt
  4 Spannverschraubung
  5 Laschen
  6 Spannstifte
  7 Spannschrauben
  8 Dichtungsmanschette
  9 Dichtlippe
10 Dichtlippe
11 Rohr kleineren Durchmessers
12 Rohr großen Durchmessers
13 Ringansatz
14 Ringansatz
15 Hohlkehle
16 Hohkehle
D1 innerer Durchmesser einer Dichtlippe
D2 innerer Durchmesser der anderen Dichtlippe

Patentansprüche

1. Elastische Rohrverbindung, insbesondere flexible Rohrkupplung (Stufenkupplung 1) zum druckdichten Verbinden zweier Rohre (11, 12) miteinander, bestehend aus einem rohrförmigen, längsgeschlitzten metallischen Mantel (2), einer daran befestigten Spannverschraubung (4) zur Verengung des Längsschlitzes (3) und einer innerhalb des Mantels (2) angeordneten Dichtmanschette (8) aus elastischem Material, insbesondere Kunstkautschuk, mit an den beiden freien Enden angeformten, sich radial mit vorgegebener Stärke nach innen zu den Rohren (11, 12) hin erstreckenden Dichtlippen (9, 10), dadurch gekennzeichnet, daß die Dichtlippen (9, 10) eine voneinander unterschiedliche radiale Stärke haben und daß die axiale Breite der radial stärkeren Dichtlippe (9) größer als die der anderen Dichtlippe (10) ist.

2. Elastische Rohrverbindung nach Anspruch 1, dadurch gekennzeichnet, daß die radiale Stärke der einen Dichtlippe (D1) um 4 mm gegenüber der der anderen Dichtlippe vergrößert ist.

3. Elastische Rohrverbindung nach Anspruch 1 und 2, dadurch gekennzeichnet, daß bei Rohrnennweiten zwischen 50 mm und 350 mm der innere Durchmesser (D2) der einen Dichtlippe 4 mm bis 25 mm mehr als der innere Durchmesser (D1) der zweiten Dichtlippe beträgt.

4. Elastische Rohrverbindung nach einem der Ansprüche 1 bis 3, dadurch gekennzeichnet, daß die Dichtlippen (9, 10) mit einem jeweils axial nach innen angeformten, im Querschnitt trapezförmigen, durch eine Hohlkehle (15, 16) am Steg der Dichtmanschette (8) freigestellten Ringansatz (13, 14) versehen sind.

## Claims

1. An elastic pipe joint, more particularly a flexible pipe coupling (step coupling 1) for connecting two pipes (11, 12) in pressure-tight manner, and comprising a tubular, longitudinally slotted metal jacket (2), a screw clamp (4) secured thereto in order to narrow the longitudinal slot (3), and a sealing sleeve (8) of elastic material, more particularly synthetic rubber, disposed inside the jacket (2), with sealing lips (9, 10) integrally formed on the two free ends and having a preset thickness and extending radially inwards to the pipes (11, 12), characterised in that the sealing lips (9, 10) have a different radial thickness from one another, and in that the axial width of the radially thicker sealing lip (9) is greater than that of the other sealing lip (10).

2. An elastic pipe joint according to claim 1, characterised in that the radial thickness of one sealing lip (D1) is made > 4mm greater than that of the other sealing lip.

3. An elastic pipe joint according to claims 1 and 2, characterised in that in the case of pipes having a nominal diameter between 50 mm and 350 m, the inside diameter (D2) of one sealing lip is > 4 to 25 mm greater than the inside diameter (D1) of the second sealing lip.

4. An elastic pipe joint according to any of claims 1 to 3, characterised in that the sealing lips (9, 10) each have an annular attachment (13, 14) which is integrally formed axially and inwardly, is trapezoidal in cross-section, and is detached by means of a groove (15, 16) on the web of the sealing sleeve (8).

## Revendications

1. Liaison élastique pour tubes, notamment raccord flexible de tubes (raccord étagé 1), pour relier de manière étanche deux tubes (11, 12), et se composant d'une enveloppe métallique tubulaire (2) fendue longitudinalement, sur laquelle est fixé un dispositif de serrage par vis (4) destiné à rétrécir la fente longitudinale (3), et d'une garniture d'étanchéité (8) en matériau élastique, notamment du caoutchouc synthétique, agencée à l'intérieur de l'enveloppe (2) et comportant des lèvres d'étanchéité (9, 10), formées aux deux extrémités libres de la garniture, et s'étendant radialement vers l'intérieur, avec une épaisseur prédéfinie, en direction des tubes (11, 12), raccord caractérisé en ce que les lèvres d'étanchéité (9, 10) présentent des épaisseurs radiales différentes entre-elles, et en ce que la largeur axiale de la lèvre d'étanchéité (9) présentant la plus grande épaisseur radiale, est supérieure à celle de l'autre lèvre d'étanchéité (10).

2. Liaison élastique pour tubes selon la revendication 1, caractérisée en ce que l'épaisseur radiale de l'une des lèvres d'étanchéité (9) est augmentée d'environ > 4 mm par rapport à celle de l'autre lèvre d'étanchéité.

3. Liaison élastique pour tubes selon la revendication 1 et 2, caractérisée en ce que pour des tubes de diamètre nominal compris entre 50 mm et 350 mm, le diamètre intérieur (D2) de l'une des lèvres d'étanchéité est supérieur de > 4 mm à 25 mm au diamètre intérieur (D1) de la deuxième lèvre d'étanchéité.

4. Liaison élastique pour tubes selon l'une des revendications 1 à 3, caractérisée en ce que les lèvres d'étanchéité (9, 10) sont pourvues chacune d'un bourrelet annulaire (13, 14) de section transversale trapézoïdale, formé sur celles-ci en s'étendant axialement vers l'intérieur, et séparé de la nervure de la garniture d'étanchéité (8) par l'intermédiaire d'une gorge (15, 16).

Fig.1

Fig.2

Fig. 3